(19) **Europäisches Patentamt**

**European Patent Office**

**Office européen des brevets**

(11) **EP 1 538 420 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
***G01B 21/04*** (2006.01)

(21) Anmeldenummer: **03027779.2**

(22) Anmeldetag: **03.12.2003**

(54) **Variabler Prüfkörper und Halterung für variable Prüfkörper**

Variable test body and fixing device for variable test bodies

Etalon variable et dispositif de fixation pour étalons variables

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**08.06.2005 Patentblatt 2005/23**

(73) Patentinhaber: **metronom AG**
**55120 Mainz (DE)**

(72) Erfinder: **Heimer, Dietmar**
**55120 Mainz (DE)**

(74) Vertreter: **Grünecker, Kinkeldey,**
**Stockmair & Schwanhäusser**
**Anwaltssozietät**
**Maximilianstrasse 58**
**80538 München (DE)**

(56) Entgegenhaltungen:
**DE-A- 19 915 012       US-A- 6 023 850**
**US-A1- 2003 209 051**

## Beschreibung

Gebiet der Erfindung

Die Erfindung betrifft einen variablen Prüfkörper, der aus wenigstens zwei Targets und einem Verbindungselement besteht, und eine Halterung für solche variable Prüfkörper.

Stand der Technik

Für die Überwachung von Koordinatenmessgeräten und Fertigungsgeräten sind Messungen an Prüfkörpern erforderlich, die die wesentlichsten Abweichungen des Messgerätes oder des Fertigungsgeräts erfassen. Solche Prüfkörper als mechanische Vergleichsnormale stellen eine wirtschaftliche Alternative gegenüber messenden Vergleichsnormalen, wie z.B. Interferometern dar. Obwohl die Messungen mit Interferometern zuverlässige Aussagen über die Präzision der geprüften Geräte liefern, ist ein solches Verfahren in der Praxis sehr zeitaufwendig, so dass die Überwachungsintervalle oftmals sehr lang, z.B. jährlich, gewählt werden. Moderne Bearbeitungsmaschinen und Industrieroboter arbeiten in engen Toleranzbereichen und weisen zum Teil ein Driftverhalten auf, so dass häufigere Überprüfungen notwendig sind. Mit mechanischen Prüfkörpern sind zusätzliche Prüfungen in kürzeren Zeitintervallen auch unter wirtschaftlichen Gesichtspunkten möglich.

Je nach Einsatzgebiet werden an die Prüfkörper verschiedene Anforderungen gestellt. Insbesondere sollen sie im Rahmen der Standardmessbedingungen, also bei einer Temperatur von -20°C bis +70°C und einer Luftfeuchtigkeit von 0% bis 100%, zuverlässige Messergebnisse sichern, um unter verschiedenen Umgebungsbedingungen einsetzbar zu sein. Weiterhin sind die zu messenden Dimensionen zum Teil sehr unterschiedlich. Sie können bei großen zu vermessenden Geräten im Bereich von einigen Metern bis über 10 Metern liegen. Ein anderer Gesichtspunkt ist die Flexibilität und die Mobilität des Prüfkörpers, weshalb ein großer Prüfkörper für den Transport bevorzugt zerlegbar sein und ein möglichst geringes Gewicht haben sollte, wobei jedoch die Genauigkeit der Messungen am Prüfkörper gewährleistet sein muss.

Ein mechanischer Prüfkörper wird in der DE 199 15 012 A1 beschrieben. Er besteht aus vier Antastformelementen und sechs Verbindungselementen die in Tetraederform zusammengesetzt werden, so dass sich die Antastformelemente and den Ecken des Tetraeders befinden. Jedes Verbindungselement befindet sich zwischen zwei Antastformelementen. Die Materialien dieses Prüfkörpers sind so gewählt, dass sich ein Längenausdehnungskoeffizient von Antastpunkt zu Antastpunkt ergibt, der im Wesentlichen gleich Null ist. Dabei sind konstruktionsbedingt die Verbindungselemente gleich lang, um durch die spezielle Form des Tetraeders eine selbsttragende Struktur zu liefern, welche die Antastformelemente in wohldefinierten Positionen hält. Ein solcher Prüfkörper kann zerlegt werden, die Antastformelemente sind aus Stahl oder Glaskeramik und die Verbindungselemente sind aus leichtem Material, nämlich Carbon-Faser-Kunststoff (CFK) gefertigt, wodurch eine gute Transportierbarkeit gewährleistet ist. In einer Ausführungsform bestehen die lösbaren Verbindungen der Antastformelemente mit den Verbindungselementen aufgrund von Magnetkräften.

Die Teile des Tetraeders können aber auch so zusammengesetzt werden, dass eine Anzahl von Verbindungselementen hintereinander angeordnet wird, mit jeweils einem Antastformelement dazwischen und jeweils eines an den beiden Enden der linearen Anordnung, woraus dann ein Kugelstab gebildet wird. Dabei werden gegebenenfalls bis zu drei zusätzliche Antastformelemente eingesetzt. Die Antastformelemente können je nach Einsatzgebiet verschiedene Ausführungen haben, z.B. in Form einer Kugel oder einer anderen Form. Es stehen dann Antastpunkte in Abständen von einem ganzzahligen Vielfachen des Abstandes zweier benachbarter Antastformelemente zur Verfügung, wobei der minimale Abstand durch die Länge eines einzelnen der gleich langen Verbindungselemente bestimmt wird und die maximale Länge das sechsfache des minimalen Abstandes beträgt.

Um einen so gebildeten Kugelstab in das Messvolumen einzubringen, bedarf es aus Stabilitäts- und Justierungsgründen einer Halterung. Diese besteht nach dem Stand der Technik in diesem Fall aus einzelnen Aufnahmen, auf die die Antastformelemente aufgelegt werden, wobei jedoch eine ausreichend lineare Ausrichtung des Kugelstabs mit geringer Fluchtungsabweichung erzielt werden muss.

Die Antastung an die Antastformelemente erfolgt taktil, d.h. sie werden z.B. mit Messstiften durch direkte Berührung angetastet. Jedoch zählen zum Stand der Technik auch Elemente die durch Licht angemessen werden. Allgemein wird hier ein anmessbares Element eines Prüfkörpers Target genannt. Für Messungen mit taktilen Systemen werden z.B. Chrom- oder Edelstahlkugeln verwendet, und die Bestimmung des Kugelmittelpunktes erfolgt über eine Kugelvermessung. Auch sogenannte Reset-Targets können mit taktilen Systemen angemessen werden, wobei der Mittelpunkt der Kugel durch einen Konus eingearbeitet ist, in den eine kleiner Kugel mit definiertem Durchmesser eingelegt wird, so dass der Mittelpunkt des Targets direkt über eine einfache Punktmessung angetastet werden kann. Erfolgt die Antastung mit Licht, so kommen z.B. für Messungen mit photogrammetrischen und anderen optischen Systemen sogenannte Retro-Targets bzw. Theodolit-Targets zum Einsatz. Schließlich können auch Prismen für Messungen mit einem Laser Tracker als Target verwendet werden.

Aus dem Stand der Technik sind auch andere Kugelstäbe bekannt, wobei die Antastformelemente Kugeln sind, die aus Keramik bestehen, auf einem Tragkörper in gleichmäßigen Abständen durch fest mit dem Tragkörper verbundene Blattfederelemente gehalten werden. Der genaue Abstand der Kugeln ist dabei durch Distanzrohre aus Stahl, die zwischen die Kugeln geklemmt werden, vorgegeben.

Aus dem Stand der Technik ist eine Halterung für lineare Kugelstäbe mit fixierten Kugelbefestigungen bei konstanten Kugelabständen bzw. die Verwendung von unabhängigen Einzelaufnahmen bekannt.

Weitere bekannte Prüfkörper, die zwei bzw. drei Raumdimensionen erfassen, sind in Form einer Kugelplatte bzw. eines Kugelquaders ausgestaltet, wobei die Abstände der Kugeln untereinander fest vorgegeben sind.

Die Prüfkörper, die aus dem Stand der Technik bekannt sind, haben entweder den Nachteil aufgrund der vorgegebenen Kugelabstände unflexibel zu sein oder aufgrund einer für viele Zwecke ungeeigneten Halterung nicht verwendbar zu sein.

Bei der Halterung mit festen Kugelbefestigungen wirkt sich nachteilig aus, dass die Abstände der Kugeln aufgrund der am Tragkörper fixierten Position der Kugelhalterungen festgelegt und konstant sind. Anpassungen der Kugelabstände an die jeweiligen Messanforderungen sind damit nicht möglich.

Sind die Kugeln und Stäbe eingeklemmt, so entstehen Spannungen, die das Messergebnis verfälschen können, was nachteilig ist. Weiterhin nachteilig ist eine weniger gute Temperaturneutralität bei einer Verwendung von Stahl als Material für die Distanzrohre.

Wird ein Kugelstab auf Einzelaufnahmen aufgelegt, so ist auf eine ausreichend lineare Ausrichtung des Kugelstabs zu achten, um eine geringe Fluchtungsabweichung zu erzielen, was mit unabhängig voneinander zu justierenden Aufnahmen nur bedingt und schwierig zu erreichen ist und deshalb nachteilig ist.

Aus dem Stand der Technik sind, wie oben beschrieben, nur Prüfkörper bekannt, die feste Abstände der Targets aufweisen. Dabei sind die Abstände schon konstruktionsbedingt festgelegt. Im Falle der Kugelstäbe mit variablen Längen der Verbindungselemente ist eine solche Konstruktion entweder instabil und damit nicht handhabbar oder nur schwierig auszurichten und nur unter großem Justieraufwand im Messvolumen den Anforderungen entsprechend zu positionieren.

Variable Prüfkörper, die eine oder mehrere Dimension erfassen, und eine dazugehörige stabile Halterung für solche flexibel zu gestaltenden Prüfkörper sind aus dem Stand der Technik nicht bekannt. Aus dem Stand der Technik ist nur eine Halterung für lineare Kugelstäbe mit fixierten Kugelbefestigungen bei konstanten Kugelabständen bzw. die Verwendung von unabhängigen Einzelaufnahmen bekannt.

Dokument US 2003/0209051 A1 offenbart eine Kalibriereinrichtung mit einem festen und einem bewegbaren Sockel. Dokument US-A-6 023 850 offenbart einen Prüfkörper mit zwei Kugeln und einem Stab.

Beschreibung der Erfindung

Angesichts der Nachteile des Stands der Technik, liegt der Erfindung das Problem zugrunde, einen variablen Prüfkörper und eine dazugehörige Halterung für variable Prüfkörper zur Verfügung zu stellen, die so auf einander abgestimmt sind, dass ein solcher variabler Prüfkörper von der Halterung gehalten werden kann.

Zum einen, soll ein variabler Prüfkörper zur Verfügung gestellt werden, der flexibel zu gestalten ist, so dass im Rahmen eines gegebenen Satzes von Targets und Verbindungselementen, die zumindest teilweise unterschiedliche Abstände der Targets ermöglichen (mit anderen Worten, die nicht notwendigerweise alle gleiche Targetabstande bewirken), verschiedene Prüfkörper zusammengesetzt werden können und die bis zu drei Dimensionen erfasst.

Zum anderen soll eine Halterung für variable Prüfkörper zur Verfügung gestellt werden, von der wenigstens ein solcher Prüfkörper gehalten wird, wodurch es möglich sein soll, Prüfkörper mit variabel zu gestaltenden Abständen der Targets stabil in das Messvolumen zu positionieren. Darüber hinaus muss eine solche Halterung gewährleisten, dass die Targets des Prüfkörpers für die Messungen, seien sie taktil oder mit Hilfe von Licht, hinreichend zugänglich sind.

Das zuvor genannte Problem wird gelöst durch einen erfindungsgemäßen Prüfkörper gemäß Anspruch 12.

Außerdem umfasst die Erfindung eine Halterung für Prüfkörper gemäß Anspruch 1.

Ein erfindungsgemäßer Prüfkörper zeichnet sich dadurch aus, dass er zum Einsatz in der erfindungsgemäßen Halterung geeignet ist und variable Targetabstände möglicht, wobei die erfindungsgemäße Halterung an den jeweiligen Prüfkörper angepasst werden kann und gleichzeitig eine stabile Lage und flexibler Handhabung des Prüfkörpers ermöglicht.

Ein solcher erfindungsgemäßer Prüfkörper kann je nach Anforderung unterschiedliche Abstände der Targets realisieren, an die Größe des Messvolumens angepasst werden und auch mehrere Dimensionen erfassen. Weiterhin hat er im Rahmen der Fertigungstoleranzen keine thermische Längenausdehnung unter Standardbedingungen und sichert somit die gewählten Abstände der Targets. Die zumindest teilweise Verwendung von CFK-Material für die Verbindungselemente hat auch den Vorteil, einen leichten und damit gut handhabbaren, gut transportierbaren und von der erfindungsgemäßen Halterung sicher zu haltenden Prüfkörper zur Verfügung zu stellen.

Eine erfindungsgemäße Halterung zeichnet sich dadurch aus, dass sie einen erfindungsgemäßen Prüfkörper halten kann. Sie hat den Vorteil, dass wenigstens zwei Aufnahmen entlang der wenigstens einen Führung so verschiebbar sind, dass eine Anpassung der Position der wenigstens zwei verschiebbaren Aufnahmen an die Position jeweils eines Targets des Prüfkörpers möglich ist, wodurch wenigstens ein erfindungsgemäßer Prüfkörper sicher gehalten wird. Dadurch ist ein einfaches Einbringen des Prüfkörpers in das Messvolumen möglich, unter Wahrung der Prüfkörperstabilität und der Targetabstände.

Weiterhin zeichnet sich die erfindungsgemäße Halterung dadurch aus, dass der Träger aus einem Material besteht, dessen Längenausdehnungskoeffizient $\alpha = \Delta L/L$ im Bereich von $\alpha = 0 \pm 20 \mu m/°Cm$, vorzugsweise $\alpha = 0 \pm 10 \mu m/°Cm$, höchst vorzugsweise $\alpha = 0 \pm 1 \mu m/°Cm$ liegt. Dabei ist $\Delta L$ die Längenänderung in $\mu m$ pro °C Temperaturänderung pro Länge $L$ in $m$.

Je nach Anforderung kann mehr als einen Träger verwendet werden. Beispielsweise kann dies bei einer weiter unten genannten Abzweigung eines Kugelstabs erforderlich sein. Weiterhin kann es erforderlich sein, mehr als einen Prüfkörper durch eine Halterung zu halten. Aus Stabilitätsgründen kann es vorteilhaft sein, die Aufnahmen durch mehr als eine Führung verschiebbar anzuordnen. Werden die Targets nicht nur entlang einer Geraden, wie z.B. bei einem Kugelstab, ausgerichtet, so ist es vorteilhaft, wenigstens eine weitere Führung auf oder/und in dem Träger anzuordnen, die eine variable Positionierung der Aufnahmen in zwei oder mehrere parallele oder/und unterschiedliche Richtungen zulässt.

Im Fall des Kugelstabes der aus den Tetraederbestandteilen gebildet wird, können erfindungsgemäß zumindest teilweise unterschiedliche Längen der Verbindungselemente eingesetzt werden, um die Abstände der Targets flexibel zu gestalten, und damit variable Kugelstäbe zu erhalten. Hat man beispielsweise einen Satz von $n$ geeignet verschieden langen Verbindungselementen und $n + 1$ Targets zur Verfügung, so können durch entsprechende Auswahl und Kombination der Verbindungselemente insgesamt $n+n\cdot(n+1)/2$ verschiedene Targetabstände realisiert werden, während es bei einem entsprechenden Satz, der gleich lange Verbindungselemente enthält, nur $n$ verschiedene Targetabstände sind. Seinen als Zahlenbeispiel etwa jeweils 6 Vebindungselemente und 7 Targets in den jeweiligen Sätzen vorhanden, so können im Fall der variablen Längen der Verbindungselemente 27 verschiedene Targetabstände gebildet werden. Im Fall gleich langer Verbindungselemente sind es nur 6 verschiedene Targetabstände, wie bereits weiter oben erwähnt.

Weitere Variationsmöglichkeiten für einen Prüfkörper auf der Basis eines Kugelstabs bestehen erfindungsgemäß darin, eine allgemeinere Anordnung zu wählen, wobei z.B. mittels eines weiteren Targets und zwei weiteren Verbindungselementen auch eine seitliche Abzweigung an einen linearen Kugelstab gebildet werden kann, um eine zweite Dimension zu erfassen. Mit einer weiteren Abzweigung kann die dritte Dimension erfasst werden. Auf diese Weise können mittels geeigneter Längen der Verbindungselemente in den Abzweigungen z.B. auch wohldefinierte Winkel zwischen den Targets reproduzierbar dargestellt werden. Solche Abzweigungen sind jedoch um die Achse des linearen Kugelstabs instabil und müssen entsprechend gehalten werden.

Die Verbindungselemente eines variablen Prüfkörper müssen erfindungsgemäß nicht auf die Verbindung von genau zwei Targets beschränkt sein, sondern können auch drei oder mehr Targets miteinander verbinden. Die Variationsmöglichkeiten eines solchen Prüfkörpers gründen sich zum einen auf die unterschiedlichen Positionen der Targets, die von den einzelnen Verbindungselementen vorgegeben werden, und zum anderen aus den verschiedenen Kombinationsmöglichkeiten von mehreren Verbindungselementen, die über die Targets gekoppelt sind.

Die zuvor genannte Halterung kann wie im Folgenden beschrieben weitergebildet werden.

In einer Weiterbildung sind mehrere oder alle Auflagen verschiebbar, wodurch die Positionen mehrerer Targets variabel wird. Dadurch können beispielsweise variable Kugelstäbe, die aus zumindest teilweise verschieden langen Stäben und aus Targets bestehen, so zusammengesetzt und gehalten werden, dass die Position der Aufnahmen an die jeweilige Position der Targets angepasst wird.

In einer anderen Weiterbildung ist wenigstens eine der Aufnahmen fest mit dem Träger verbunden, wobei dennoch wenigstens zwei Aufnahmen verschiebbar sind. Auf diese Weise kann z.B. ein Prüfkörper gehalten werden, indem wenigstens eine feste Aufnahme eines der Targets aufnimmt und wenigstens zwei andere Aufnahmen durch Verschiebung an die durch das jeweilige Verbindungselement bestimmte Position des jeweiligen anderen Targets angepasst wird. Mit einer solchen Halterung ist es beispielweise möglich variable Kugelstäbe zu halten, so dass wenigstens ein Target eine feste Position bezüglich der Halterung hat.

In einer anderen Weiterbildung hat das Material aus dem der wenigstens eine Träger besteht, einen thermischen Längenausdehnungskoeffizient $\alpha = \Delta L/L$ im Bereich von $\alpha = 0 \pm 20 \mu m/°Cm$, vorzugsweise $\alpha = 0 \pm 10 \mu m/°Cm$, höchst vorzugsweise $\alpha = 0 \pm 1 \mu m/°Cm$.

Eine andere Weiterbildung besteht darin, dass das Material des wenigstens einen Trägers CFK-Material umfasst.

Durch Verwendung eines derartigen Materials können insbesondere sogar thermische Längenausdehnungskoeffizienten im Bereich von $\alpha = \Delta L/L = 0 \pm 0.1 \mu m/°Cm$ realisiert werden. Ein solcher Träger hat außer im Rahmen der Fertigungstoleranzen keine thermische Längenausdehnung im Bereich der Standardbedingungen.

In einer anderen vorteilhaften Weiterbildung der erfindungsgemäßen Halterung ist wenigstens eine Auflage derart ausgestaltet ist, dass wenigstens ein Target eines Prüfkörpers durch magnetische Kräfte gehalten wird. Dies hat den Vorteil, dass das wenigstens eine Target schnell und einfach auf der Aufnahme angebracht werden kann, und dass es sicher gehalten wird.

Eine andere Weiterbildung besteht darin, das wenigstens ein gehaltener Prüfkörper ein Kugelstab ist, und die Halterung eine so geringe Fluchtungsabweichung der linearen Ausrichtung der Targets sicherstellt, dass die Abweichung des Abstands zweier beliebiger Targets eines Kugelstabs von dem entsprechenden Abstand der geometrisch exakten linearen Ausrichtung kleiner als die Kalibrierunsicherheit $U = 1.5\mu m + 1.5\mu m \cdot L/m$ ist, wobei $L$ der Abstand zwischen zwei Targets ist. Die Kalibrierunsicherheit enthält einen konstanten und einen längenabhängigen Anteil. Die Kalibrierunsicherheit eines Verbindungselements, das zwei Targets in einem Abstand von beispielsweise 2 Metern voneinander positioniert, beträgt demnach 4.5 $\mu m$. In dieser Ausführung wird eine hinreichend gute lineare Ausrichtung der Targets gewährleistet, so dass die Abstände zweier beliebiger Targets des Kugelstabs den Messanforderungen entsprechend gut bekannt sind.

In einer anderen Weiterbildung besteht der wenigstens eine Träger aus Einzelelementen und diese Einzelelemente werden durch wenigstens eine lösbare Verbindung zusammengehalten, derart, dass eine Reproduzierbarkeit der Halterung gewährleistet ist, insbesondere, dass die Genauigkeit der Abstände der Targets eines gehaltenen Prüfkörpers nach jeder Montage der Halterung kleiner als die Kalibrierunsicherheit $1.5\mu m + 1.5\mu m \cdot L/m$ ist. In dieser Ausführungsform können große Halterungen für den Transport zerlegt werden und so wieder zusammengesetzt werden, dass die Messungen an den Targets der gehaltenen Prüfkörper reproduzierbar sind.

Eine weitere vorteilhafte Weiterbildung erhält man, wenn die Positionen der Targets eines gehaltenen Prüfkörpers aufgrund geeigneter Materialien und geeigneter Geometrien der Bestandteile der Halterung, durch im Rahmen der Standardmessbedingungen variierende physikalische Umgebungsbedingungen oder/und durch mechanische Einflüsse bei bestimmungsgemäßer Verwendung der Halterung und ihrer Bestandteile, höchstens innerhalb der Kalibrierunsicherheit $1.5\mu m + 1.5\mu m \cdot L/m$ variieren.

Eine andere vorteilhafte Weiterbildung ist dadurch gekennzeichnet, dass die Kombination der Aufnahmen wenigstens einen Richtungsfreiheitsgrad aufweist, wobei der jeweilige Freiheitsgrad in Richtung der Verbindungslinie der verbundenen Targets zeigt, so dass die Targets und die Verbindungselemente keinen Spannungen unterliegen. Das wird z.B. durch eine Kombination von Punkt- und V-Auflagen ermöglicht. Gegebenenfalls ist auch eine Flächenaufnahme einsetzbar. Eine solche Anordnung zeichnet sich dadurch aus, dass ein spannungsfreier Aufbau des Prüfkörpers erfolgen kann, und dass der Prüfkörper auch spannungsfrei gehalten wird. Indem das erste Target z.B. auf eine Punktauflage gelegt wird und danach das Verbindungselement an das erste Target magnetisch angekoppelt wird, kann schließlich auch das zweite Target auf einer V-Aufnahme zwangsfrei an das andere Ende des Verbindungselements herangeführt und angekoppelt werden. Auf diese Weise ist es darüber hinaus möglich, weitere Verbindungselemente und Targets hinzuzufügen und zu einem größeren Prüfkörper auf der Halterung aufzubauen, wie z.B. ein Kugelstab. Spannungsfreie Abzweigungen an einen Kugelstab können dann mit Flächenaufnahmen erzielt werden.

In einer anderen vorteilhaften Weiterbildung umfasst die Halterung wenigstens eine Befestigung, an der die Halterung im Messvolumen befestigt werden kann. Im speziellen können diese Befestigungen z.B. dazu geeignet sein, die Halterung auf ein oder mehrere Stative anzubringen.

Die verschiedenen Weiterbildungen lassen sich unabhängig voneinander einsetzen oder geeignet miteinander kombinieren.

Weitere bevorzugte Ausführungsformen der Erfindung werden im Nachfolgenden unter Bezugnahme auf die Zeichnungen beschrieben.

Kurzbeschreibung der Zeichnungen

Fig. 1 zeigt eine erste Ausführung eines erfindungsgemäßen Prüfkörpers mit einer erfindungsgemäßen Halterung.

Fig. 2 dient der Veranschaulichung einer speziellen Form von Aufnahmen für Prüfkörper, wobei Halterung und Prüfkörper nicht alle Merkmale der Ansprüche 1 bzw. 12 aufweisen und somit nicht durch diese Ansprüche abgedeckt sind.

Fig. 3 dient zur Veranschaulichung des Begriffs der Fluchtungsabweichung der linearen Ausrichtung eines Kugelstabs

Fig. 4 zeigt eine weitere Ausführung eines erfindungsgemäßen Prüfkörpers in Form eines Kugelstabs mit einer Abzweigung

Beschreibung der Ausführungsformen

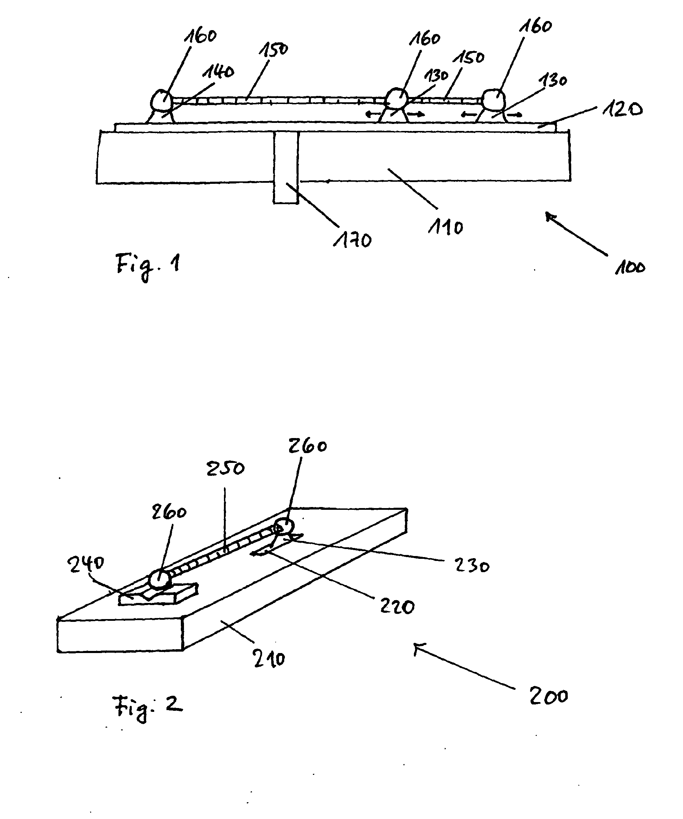

Fig. 1 zeigt einen erfindungsgemäßen Prüfkörper auf einer erfindungsgemäßen Halterung. Der Prüfkörper ist in diesem Beispiel ein Kugelstab, mit zwei Verbindungselementen 150 und drei Targets 160, die durch magnetische Kräfte lösbar zusammengehalten werden. Dabei können die Verbindungselemente und Targets, aus einem vorgegebenen Satz ausgewählt werden, in dem wenigsten zwei verschieden lange Verbindungselemente vorhanden sind, so dass verschiedene Abstände der Targets realisierbar sind. Die Halterung umfasst einen Träger 110, der in Einzelelemente zerlegbar ist, die durch eine lösbare Verbindung 170 zusammengehalten werden, sowie weiterhin eine Führung 120 für die Aufnahmen 130, 140 auf denen sich die Targets befinden. Eine Aufnahme 140 ist fest am Träger angebracht, so dass die exakte Lage des darauf befindlichen Targets auch relativ zur Halterung bekannt ist. Zwei Aufnahmen 130 sind verschiebbar, so dass eine Anpassung der Position der Aufnahmen an die Längen der Verbindungselemente und die damit definierten Abstände und Positionen der Targets möglich ist. Das Trägermaterial umfasst CFK-Material.

Dieses Material wurde unter Verwendung von Tennax UMS 252624K Fasern und Harz mit der DIN Bezeichnung L 160 sowie Härter mit der DIN Bezeichnung H 163 hergestellt. Hierdurch wurde ein thermischer Längenausdehnungskoeffizient von $|\alpha| \leq 0.1 \mu m/°Cm$ erreicht.

In Fig. 2 ist eine vorteilhafte Ausführungsform der Auflagen dargestellt. Dabei ruht ein Target 260 eines Prüfkörpers auf einer Punktaufnahme 230 und wird dadurch in seiner Position stabilisiert. Eine weiteres Target befindet sich auf einer V-Aufnahme 240. Zwischen den beiden Targets ist ein Verbindungselement 250 angeordnet.

Eine solche Anordnung zeichnet sich dadurch aus, dass ein spannungsfreier Aufbau des Prüfkörpers erfolgen kann, und dass der Prüfkörper spannungsfrei gehalten wird. Indem das erste Target auf die Punktauflage gelegt wird und danach das Verbindungselement an das erste Target magnetisch angekoppelt wird, kann schließlich auch das zweite Target auf der V-Aufnahme zwangsfrei an das andere Ende des Verbindungselements herangeführt und angekoppelt werden. Auf diese Weise ist es darüber hinaus möglich, weitere Verbindungselemente und Targets hinzuzufügen und zu einem größeren Prüfkörper auf der Halterung aufzubauen.

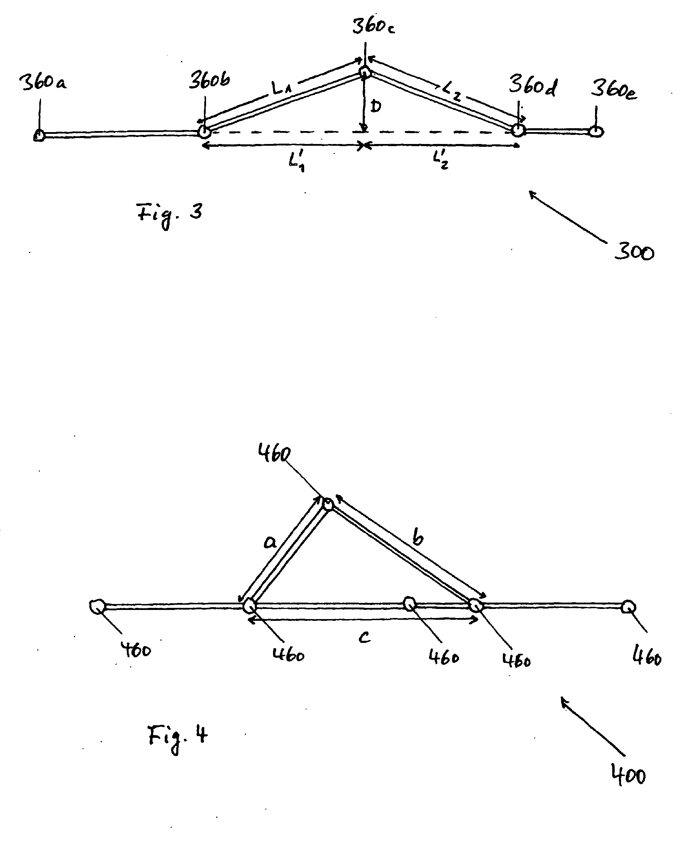

Fig. 3 erläutert den Begriff der Fluchtungsabweichung eines linear ausgerichteten Kugelstabs. Darin ist als Beispiel wenigstens ein Ausschnitt aus einem Kugelstab abgebildet, bei dem das Target 360c leicht von der geometrisch exakten Ausrichtung abweicht. Der senkrechte Abstand D von Target 360c zur Ausrichtungsgeraden wird Fluchtungsabweichung genannt. Es stellt sich nun die Frage, wie groß die Fluchtungsabweichung D höchstens sein darf, damit der Abstand $L_1 + L_2$ von Target 360b und Target 360d sich um nicht mehr als die Kalibrierunsicherheit $U$ auf $L_1'+L_2'$ verringert, denn $U$ ist mitbestimmend für die Güte des Kugelstabs, und der Betrag der Abstandsänderung sollte daher nicht größer als $U$ sein. Die größte Änderung ergibt sich, wenn der Abstand von Target 360b zu Target 360c und der Abstand von Target 360c zu Target 360d gleich ist. Angenommen dieser Abstand beträgt jeweils $L = L_1 = L_2 = 0.5m$, also einen Abstand von Target 360b zu Target 360d von $2L$ $= 1m$, wobei dann die Kalibrierunsicherheit des Abstandes von Target 360b zu Target 360d etwa $U = 3\mu m$ ist. Es soll gelten, dass $2L - 2L' \leq U$ ist. Aus der Zeichnung ergibt sich unmittelbar $D^2 + L'^2 = L^2$, woraus unmittelbar folgt, dass

$$L'/L = \sqrt{1 - D^2/L^2} \approx 1 - D^2/2L^2$$

ist, so dass die maximale Fluchtungsabweichung durch

$$D = \sqrt{2L(L - L')} \leq \sqrt{L \cdot U}$$

gegeben ist. Im konkreten Zahlenbeispiel ist also $D \leq 1.73mm$ auf einer Länge von einem Meter einzuhalten, damit die Änderung des Targetabstandes zwischen Target 360b und Target 360d höchstens gleich der Kalibrierunsicherheit ist. Diese Genauigkeit ist auch bei zerlegbaren Halterungen reproduzierbar zu erreichen. Weil die Kalibrierunsicherheit und somit auch die maximale Fluchtungsabweichung proportional mit der Länge zunehmen, also sich beide in konstantem Verhältnis zueinander ändern, ist eine ausreichende Genauigkeit auch bei wesentlich größeren Abmessungen des Prüfkörpers und der Halterung zu erzielen.

In Fig. 4 ist ein linearer Kugelstab mit einer Abzweigung dargestellt. Eine solche Abzweigung ist gegenüber Drehungen um die Achse der linearen Ausrichtung des Kugelstabs labil und muss daher von einer erfindungsgemäßen Halterung stabilisiert werden. Durch geeignete Wahl der jeweiligen Längen der Verbindungselemente können die Winkel zwischen den Verbindungsgeraden der Targets in dem Abzweigungsdreieck unterschiedlich eingestellt werden. So ist z.B. bei einem Seitenverhältnis von a:b:c von 3:4:5 der Winkel zwischen a und b ein rechter Winkel. Das gilt auch immer dann wenn $a^2 + b^2 = c^2$ ist. Wenn zusätzlich etwa noch $b = c/2$ ist, so ist der Winkel zwischen a und c gleich 30° und der zwischen b und c gleich 60°. Je nach Anforderung, kann so eine beliebige Winkelüberprüfung und im Speziellen eine Rechwinkligkeitsprüfung durchgeführt werden. Im einfachsten Fall kann der Kugelstab selbst nur aus einem Verbindungselement und zwei Targets bestehen, wobei dann das Anbringen einer Abzweigung einen dreieckigen Prüfkörper entstehen lässt. Eine Abzweigung eines Kugelstabs erfasst neben der linearen Ausrichtung des Kugelstabs eine zweite Richtung und durch Hinzufügen weiterer Abzweigungen sind weitere Richtungen erfassbar. Durch eine solche Anordnung werden beispielsweise längliche Messvolumina mit einer Vorzugsrichtung auch dreidimensional mit einem an die Erfordernisse angepassten Prüfkörper vermessbar.

**Patentansprüche**

1. Halterung (100; 200) für variable Prüfkörper, die aus wenigstens zwei Targets (160; 260) und wenigstens einem Verbindungselement (150; 250) zusammengesetzt sind, umfassend
   wenigstens einen Träger (110; 210),
   wenigstens eine Führung (120; 220), die auf oder/und in dem wenigstens einen Träger angeordnet ist, und
   Aufnahmen (130, 140; 230, 240) für die Targets wenigstens eines Prüfkörpers, wobei wenigstens zwei Aufnahmen (130; 230) entlang der wenigstens einen Führung so verschiebbar sind, dass eine Anpassung der Positionen der wenigstens zwei verschiebbaren Aufnahmen an die Positionen wenigstens zweier Targets des Prüfkörpers möglich ist, wodurch der Prüfkörper nach der Anpassung durch die Halterung gehalten werden kann.

**2.** Halterung nach Anspruch 1, umfassend weitere verschiebbare Aufnahmen für weitere Targets des wenigstens einen Prüfkörpers.

**3.** Halterung nach Anspruch 1 oder 2, wobei eine oder mehrere Aufnahmen (140; 240) fest am Träger angeordnet sind.

**4.** Halterung nach einem der vorhergehenden Ansprüche, wobei das Material aus dem der wenigstens eine Träger besteht, einen thermischen Längenausdehnungskoeffizient im Bereich von $\alpha = 0 \pm 20\mu m/°Cm$, vorzugsweise $\alpha = 0 \pm 10\mu m/°Cm$, höchst vorzugsweise $\alpha = 0 \pm 1\mu m/°Cm$ hat.

**5.** Halterung nach einem der vorhergehenden Ansprüche, wobei das Material, aus dem der wenigstens eine Träger besteht, CFK-Material umfasst.

**6.** Halterung nach einem der vorhergehenden Ansprüche, wobei wenigstens eine Auflage derart ausgestaltet ist, dass wenigstens ein Target eines Prüfkörpers durch magnetische Kräfte gehalten wird.

**7.** Halterung nach einem der vorhergehenden Ansprüche, wobei wenigstens ein Prüfkörper ein Kugelstab ist, und die Halterung eine so geringe Fluchtungsabweichung (D) der linearen Ausrichtung der Targets sicherstellt, dass die Abweichung des Abstands zweier beliebiger Targets eines Kugelstabs von dem entsprechenden Abstand der geometrisch exakten linearen Ausrichtung kleiner als die Kalibrierunsicherheit $1.5\mu m + 1.5\mu m \cdot L/m$ ist, wobei L der Abstand zwischen zwei Targets ist.

**8.** Halterung nach einem der vorhergehenden Ansprüche, wobei der wenigstens eine Träger (110; 210) aus Einzelelementen besteht und diese Einzelelemente durch wenigstens eine lösbare Verbindung (170) zusammengehalten werden, derart, dass eine Reproduzierbarkeit der Halterung gewährleistet ist, insbesondere, dass die Genauigkeit der Abstände der Targets eines gehaltenen Prüfkörpers nach jeder Montage der Halterung kleiner als die Kalibrierunsicherheit $1.5\mu m + 1.5\mu m \cdot L/m$ ist, wobei L der Abstand zwischen zwei Targets ist.

**9.** Halterung nach einem der vorhergehenden Ansprüche, wobei die Positionen der Targets eines gehaltenen Prüfkörpers aufgrund geeigneter Materialien und geeigneter Geometrien der Bestandteile der Halterung, durch im Rahmen der Standardmessbedingungen variierende physikalische Umgebungsbedingungen oder/und durch mechanische Einflüsse bei bestimmungsgemäßer Verwendung der Halterung und ihrer Bestandteile, höchstens innerhalb der Kalibrierunsicherheit $1.5\mu m + 1.5\mu m \cdot L/m$ variieren, wobei L der Abstand zwischen zwei Targets ist.

**10.** Halterung nach einem der vorhergehenden Ansprüche, wobei die Kombination der Aufnahmen (230, 240) wenigstens einen Richtungsfreiheitsgrad aufweist, so dass die Targets und die Verbindungselemente keinen Spannungen unterliegen.

**11.** Halterung nach einem der vorhergehenden Ansprüche, die darüber hinaus wenigstens eine Befestigung umfasst, an der die Halterung im Messvolumen befestigt werden kann.

**12.** Variabler Prüfkörper, umfassend
mehrere einzelne Targets und
mehrere wenigstens teilweise unterschiedlich lange einzelne Verbindungselemente, so dass wenigstens teilweise unterschiedliche Abstände der Targets realisiert werden,
wobei die Targets und Verbindungselemente derart ausgestaltet sind, dass sie durch magnetische Kräfte so zusammengehalten werden, dass der Prüfkörper ausreichend stabil ist, um von einer Halterung nach einem der Ansprüche 1-11 gehalten zu werden, und
wobei durch geeignete Materialwahl der Targets und der Verbindungselemente, die thermisch bedingte Änderung des Abstands der Targets des Prüfkörpers im Rahmen der Messtoleranzen gehalten wird.

**13.** Prüfkörper nach Anspruch 12 in Form eines Kugelstabs, worin die Targets als Kugeln und die Verbindungselemente als Stäbe ausgestaltet sind.

**14.** Prüfkörper nach einem der Ansprüche 12-13, gehalten von wenigstens einer Halterung nach einem der Ansprüche 1-11.

**Claims**

**1.** A holder (100; 200) for variable test objects, which are composed of at least two targets (160; 260) and at least one connecting element (150; 250), comprising
at least one carrier (110; 210),
at least one guide (120; 220), which is arranged on or / and in the at least one carrier, and
seats (130, 140; 230, 240) for the targets of at least one test object, wherein at least two seats (130; 230) can be moved along the at least one guide such that an adaptation of the positions of the at least two movable seats to the positions of at least two targets of the test object is possible, whereby the test object can be held by the holder after the adaptation.

2. The holder according to Claim 1, comprising further movable seats for further targets of the at least one test object.

3. The holder according to Claim 1 or 2, wherein one or more seats (140; 240) are fixedly arranged on the carrier.

4. The holder according to any one of the preceding Claims, wherein the material from which the at least one carrier is made has a linear thermal coefficient of expansion in the range of $\alpha = 0 \pm 20\ \mu m/°Cm$, preferably $\alpha = 0 \pm 10\ \mu m/°Cm$ and most preferably $\alpha = 0 \pm 1\ \mu m/°Cm$.

5. The holder according to any one of the preceding Claims, wherein the material of which the at least one carrier is composed is CFRP material.

6. The holder according to any one of the preceding Claims, wherein at least one seat is configured such that at least one target of a test object is held by magnetic forces.

7. The holder according to any of the preceding Claims, wherein at least one test object is a ball bar, and the holder ensures so little alignment deviation (D) of the linear orientation of the targets that the deviation of the distance of any two targets of a ball bar from the corresponding distance of the geometrically exact orientation is lower than the calibration uncertainty $1.5\ \mu m + 1.5\ \mu m \cdot L/m$, wherein L is the distance between two targets.

8. The holder according to any one of the preceding Claims, wherein the at least one carrier (110; 210) consists of single elements and these single elements are held together by at least one releasable connection (170) such that reproducibility of the holder is ensured, in particular such that the accuracy of the distances of the targets of a held test object after each assembly of the holder is better than the calibration uncertainty $1.5\ \mu m + 1.5\ \mu m \cdot L/m$, wherein L is the distance between two targets.

9. The holder according to any one of the preceding Claims, wherein the positions of the targets of a held test object, on account of suitable materials and suitable geometries of the constituent parts of the holder, due to physical ambient conditions varying within the scope of the standard measurement conditions or / and due to mechanical effects with proper use of the holder and its constituent parts vary at the most within the calibration uncertainty $1.5\ \mu m + 1.5\ \mu m \cdot L/m$, wherein L is the distance between two targets.

10. The holder according to any one of the preceding Claims, wherein the combination of the seats (230, 240) exhibits at least one degree of directional freedom such that the targets and the connecting elements are not subject to any stress.

11. The holder according to any one of the preceding Claims, which furthermore comprises at least one mounting with which the holder can be mounted in the measurement volume.

12. A variable test object, comprising
a plurality of individual targets and
a plurality of individual connecting elements at least partly differing in length, so that at least partly different distances of the targets are realized,
wherein the targets and connecting elements are configured such that they are held together by magnetic forces, such that the test object is adequately stable to be held by a holder according to any one of Claims 1 to 11, and
wherein due to suitable material selection of the targets and the connecting elements, the thermally induced change in the distance of the targets of the test object is maintained within the scope of the measurement tolerances.

13. The test object according to Claim 12 in the form of a ball bar, wherein the targets are formed as balls and the connecting elements as bars.

14. The test object according to any one of Claims 12 to 13, held by at least one holder according to any one of Claims 1 to 11.

**Revendications**

1. Dispositif de fixation (100 ; 200) pour étalons variables, comportant au moins deux cibles (160 ; 260) et au moins un élément de liaison (150 ; 250), comprenant
au moins un support (110 ; 210),
au moins un guidage (120 ; 220), qui est disposé sur et/ou dans au moins un des supports, et
des logements (130, 140 ; 230, 240) pour les cibles d'au moins un étalon, dans lequel au moins deux logements (130 ; 230) peuvent coulisser le long d'au moins un guidage de façon à ce qu'un ajustement des positions d'au moins deux logements aptes à coulisser soit possible sur les positions d'au moins deux cibles de l'étalon, ce qui permet à l'étalon d'être maintenu par le dispositif de fixation après l'ajustement.

2. Dispositif de fixation selon la revendication 1, comprenant d'autres logements aptes à coulisser pour d'autres cibles d'au moins un étalon.

**3.** Dispositif de fixation selon la revendication 1 ou 2, dans lequel un ou plusieurs logements (140 ; 240) sont disposés de manière fixe sur le support.

**4.** Dispositif de fixation selon l'une quelconque des revendications précédentes, dans lequel le matériau dont est composé au moins un des supports, a un coefficient thermique de dilatation en longueur de l'ordre de $\alpha = 0 \pm 20 \, \mu m/°Cm$, de préférence $\alpha = 0 \pm 10 \, \mu m/°Cm$, de préférence maximum $\alpha = 0 \pm 1 \, \mu m/°Cm$.

**5.** Dispositif de fixation selon l'une quelconque des revendications précédentes, dans lequel le matériau dont est composé au moins un support, comprend un matériau CFK.

**6.** Dispositif de fixation selon l'une quelconque des revendications précédentes, dans lequel au moins un support est conçu de manière à ce qu'au moins une cible d'un étalon soit maintenue par des forces magnétiques.

**7.** Dispositif de fixation selon l'une quelconque des revendications précédentes, **caractérisée en ce qu'**au moins un étalon est une barre à billes, et dans lequel le dispositif de fixation assure un écart d'alignement (D) de l'orientation linéaire des cibles si faible que l'écart de distance entre deux cibles quelconques d'une baguette à billes par rapport à la distance correspondante de l'orientation linéaire géométriquement exacte est inférieur à l'incertitude de calibrage $1,5 \, \mu m + 1,5 \, \mu m \cdot L/m$, dans laquelle que L est la distance entre deux cibles.

**8.** Dispositif de fixation selon l'une quelconque des revendications précédentes, dans lequel au moins un support (110 ; 210) est composé d'éléments individuels et que ces éléments individuels sont maintenus ensemble par au moins une liaison amovible (170), de manière à ce qu'une reproductibilité du dispositif de fixation soit garantie, en particulier de manière à ce que la précision des distances des cibles d'un étalon maintenu soit, après chaque montage du dispositif de fixation, inférieure à l'incertitude de calibrage $1,5 \, \mu m + 1,5 \, \mu m \cdot L/m$, dans laquelle L est la distance entre deux cibles.

**9.** Dispositif de fixation selon l'une quelconque des revendications précédentes, dans lequel les positions des cibles d'un étalon maintenu varient en raison de matériaux appropriés et de géométries appropriées des composants du dispositif de fixation, grâce aux conditions environnementales physiques variant dans le cadre des conditions de mesure standard et/ou grâce à des influences mécaniques lors d'emploi défini du dispositif de fixation et de ses composants, au maximum à l'intérieur de l'incertitude de calibrage $1,5 \, \mu m + 1,5 \, \mu m \cdot L/m$, dans laquelle L est la distance entre deux cibles.

**10.** Dispositif de fixation selon l'une quelconque des revendications précédentes, dans lequel la combinaison des logements (230, 240) présente au moins un degré de liberté d'orientation de telle sorte que les cibles et les éléments de liaison ne sont soumis à aucune tension.

**11.** Dispositif de fixation selon l'une quelconque des revendications précédentes, comprenant en outre au moins un dispositif de fixation, auquel le dispositif de fixation peut être fixé dans le volume de mesure.

**12.** Étalon variable, comprenant
plusieurs cibles individuelles et
plusieurs éléments de liaison individuels au moins partiellement de longueur différente, de telle sorte que des distances au moins partiellement différentes des cibles sont réalisées,
sachant que les cibles et les éléments de liaison sont conçus de manière à ce qu'ils sont maintenus ensemble par des forces magnétiques de façon à ce que l'étalon soit suffisamment stable pour être maintenu par un dispositif de fixation selon l'une des revendications 1 à 11, et
dans lequel, grâce à une sélection appropriée du matériau des cibles et des éléments de liaison, la modification conditionnée de manière thermique de la distance des cibles de l'étalon est maintenue dans le cadre des tolérances de mesure.

**13.** Étalon selon la revendication 12 sous forme d'une barre à billes, dans laquelle les cibles sont conçues comme des billes et les éléments de liaison comme des barres.

**14.** Étalon selon l'une des revendications 12 à 13, maintenu par au moins un dispositif de fixation selon l'une des revendications 1 à 11.

Fig. 1

Fig. 2

Fig. 3

300

Fig. 4

400